# EUROPÄISCHE PATENTSCHRIFT

(11) **EP 2 961 658 B1**
(45) Veröffentlichungstag und Bekanntmachung des Hinweises auf die Patenterteilung: **01.02.2017**
(21) Anmeldenummer: 14705108.0
(22) Anmeldetag: 13.02.2014
(51) Int. Cl.: B65B 25/00, B65B 1/32, G01G 19/393

(54) **VERPACKEN VON POLYSILICIUMBRUCHSTÜCKEN**
PACKAGING OF POLYSILICON FRAGMENTS
EMBALLAGE DE FRAGMENTS DE POLYSILICIUM

(30) Priorität: 28.02.2013 DE 102013203336
(43) Veröffentlichungstag der Anmeldung: 06.01.2016
(73) Patentinhaber: Wacker Chemie AG, 81737 München (DE)
(72) Erfinder: VIETZ, Matthias, 5230 Mattighofen (AT); LAZARUS, Werner, 84335 Mitterskirchen (DE)
(74) Vertreter: Potten, Holger
(86) Internationale Anmeldenummer: PCT/EP2014/052826
(87) Internationale Veröffentlichungsnummer: WO 2014/131625

(56) Entgegenhaltungen:
- EP-A1- 0 945 716
- EP-A1- 0 983 804
- EP-A1- 1 334 907
- EP-A1- 2 423 163
- EP-A2- 2 487 112
- EP-A2- 2 559 620
- DE-A1- 3 640 520
- US-A- 4 813 205

## Beschreibung

Die Erfindung betrifft ein Verfahren zum Verpacken von Polysiliciumbruchstücken.

Polysiliciumbruch wird beispielsweise mittels des Siemensverfahrens aus Trichlorsilan abgeschieden und danach idealer weise kontaminationsfrei zerkleinert. Ein Verfahren zum automatischen Brechen sowie eine entsprechende Vorrichtung sind in EP 1 645 333 A1 beschrieben.

Für Anwendungen in der Halbleiter- und Solarindustrie ist ein möglichst wenig kontaminierter Polysiliciumbruch erwünscht. Daher sollte das Material auch kontaminationsarm verpackt werden, bevor es zum Kunden transportiert wird.

Üblicherweise wird Polysilicium-Bruch für die Elektronikindustrie in 5 kg Beuteln mit einer Gewichtstoleranz von +/- max. 50 g verpackt. Für die Solarindustrie ist Polysilicium-Bruch in Beuteln mit einer Einwaage von 10 kg und einer Gewichtstoleranz von +/- max. 100 g üblich.

Schlauchbeutelmaschinen, die zur Verpackung von Siliciumbruch prinzipiell geeignet sind, sind kommerziell erhältlich. Eine entsprechende Verpackungsmaschine ist beispielsweise in DE 36 40 520 A1 beschrieben.

Bei Polysilicium-Bruch handelt es sich um ein scharfkantiges, nicht rieselfähiges Schüttgut mit einem Gewicht der einzelnen Si-Bruchstücke von bis zu 2500 g. Daher ist bei der Verpackung darauf zu achten, dass das Material die üblichen Kunststoffbeutel beim Befüllen nicht durchstößt oder im schlimmsten Fall sogar vollständig zerstört. Um dies zu verhindern, sind die kommerziellen Verpackungsmaschinen zum Zwecke der Verpackung von Polysilicium in geeigneter Weise zu modifizieren.

Mit kommerziellen Verpackungsmaschinen ist es in der Regel nicht möglich, die Reinheitsanforderungen, die an Polysilicium-Bruch gestellt werden, einzuhalten, da die üblicherweise verwendeten Verbundfolien aufgrund der chemischen Zusätze zu erhöhten Verunreinigungen des Polysilicium-Bruchs führen können.

Aus US 20050034430 A1 ist eine Vorrichtung zum kostengünstigen vollautomatischen Transportieren, Abwägen, Portionieren, Einfüllen und Verpacken eines hochreinen Polysiliciumbruchs umfassend eine Förderrinne für den Polysiliciumbruch, eine Wägevorrichtung für den Polysiliciumbruch, welche mit einem Trichter verbunden ist, Ablenkbleche aus Silicium, eine Abfüllvorrichtung, welche aus einer hochreinen Kunststofffolie einen Kunststoffbeutel formt, umfassend einen Deionisierer, der eine statische Aufladung und damit eine Partikelverunreinigung der Kunststofffolie verhindert, eine Verschweißvorrichtung für den mit Polysiliciumbruch gefüllten Kunststoffbeutel, eine oberhalb von Förderrinne, Wägevorrichtung, Abfüllvorrichtung und Verschweißvorrichtung angebrachte Flowbox, die eine Partikelverunreinigung des Polysiliciumbruchs verhindert, ein Förderband mit einem magnetisch induktiven Detektor für den verschweißten mit Polysiliciumbruch gefüllten Kunststoffbeutel, wobei alle Bauteile, die mit dem Polysiliciumbruch in Kontakt kommen, mit Silicium armiert oder mit einem hochverschleißfestem Kunststoff verkleidet sind.

Mittel zur Portionierung des Polysiliciumbruchs sind beispielsweise eine zeitgesteuerte Förderrinne oder eine Füllhöhenbestimmung eines Vorratsbehälters oder eine Wägevorrichtung für den Polysiliciumbruch. Eine entsprechende Wägevorrichtung ist beispielsweise aus US 4813205 A bekannt.

Die Vorrichtung gemäß US 20050034430 A1 soll eine kontaminationsarme Verpackung ohne Humankontakt ermöglichen. Die kontaminationsarme Verpackung soll insbesondere durch die Armierung der Einbauteile mit Silicium oder mit einem hochverschleißfesten Kunststoff bewerkstelligt werden.

Allerdings hat sich gezeigt, dass gerade die Portionierung des Silicium-Bruchs bei einem Vorgehen gemäß US 20050034430 A1 problematisch ist. Eine exakte Einwaage von 10 kg Polysiliciumbruch mit einer Toleranz von +/- 100 g ist mittels dieser Vorrichtung nicht möglich.

Zudem erwies sich die gesamte Anordnung durch die Armierung aller Teile, die mit Silicium in Berührung kommen, mit Silicium oder Kunststoff als mechanisch wenig stabil. Der relativ hohe Verschleiß der Silicium- und Kunststoffbeschichtungen macht die Verpackungsmaschinen äußerst wartungsintensiv.

US 20100154357 A1 offenbart eine Vorrichtung zum Verpacken von polykristallinem Silicium-Bruch oder Polysiliciumgranulat, bestehend aus einer Rundläufer-, Füll-, und Schließmaschine oder einer nicht kreisförmig angeordneten Vorrichtung mit einer Befüllstation und einer Verschlussstation, in der ein PE-Beutel an einem Greifersystem aufgehängt ist, von Station zu Station in einer Taktfolge bewegt wird, dadurch gekennzeichnet, dass die Befüllstation einen frei hängenden Energieabsorber aus einem nichtmetallischen kontaminationsarmen Werkstoff umfasst, welcher vor dem Befüllen des PE-Beutels mit polykristallinem Silicium in den PE-Beutel eingeführt wird und nach dem Befüllen des PE-Beutels mit polykristallinem Silicium aus dem PE-Beutel entfernt wird und der gefüllte PE-Beutel mittels des Greifersystems in die Verschlussstation weiterbefördert wird und dort verschlossen wird.

US 20100154357 A1 beschreibt auch ein Verfahren zur Verpackung von polykristallinem Silicium, bei dem polykristallines Silicium mittels einer Abfüllvorrichtung in einen frei hängenden, fertig geformten, Beutel gefüllt wird, wobei der gefüllte Beutel anschließend verschlossen wird, dadurch gekennzeichnet, dass der Beutel aus hochreinem Kunststoff mit einer Wanddicke von 10 bis 1000 µm besteht. Vorzugsweise wird der mit polykristallinem Silicium gefüllte, verschlossene Kunststoffbeutel in einen weiteren Kunststoffbeutel aus PE mit einer Wanddicke von 10 bis 1000 µm eingebracht und dieser zweite Kunststoffbeutel verschlossen.

US 20100154357 A1 zufolge wird das Polysilicium vor dem Verpacken zunächst portioniert und gewogen. Dabei erfolgt die Portionierung und Einwaage des Polysilicium-Bruchs mittels eines aus dem Stand der Technik bekannten händischen oder automatischen Verfahrens. Bezüglich automatischer Portionierung ist die aus US 20050034430 A1 bekannte Vorrichtung genannt, die jedoch die zuvor beschriebenen Nachteile aufweist.

Das Verschweißen des PE-Beutels erfolgt US 20100154357 A1 zufolge mit einem Heißsiegelschweißgerät, bei dem der metallische Schweißdraht mit einem nichtmetallischen Werkstoff, z. B. Polytetrafluorethylen (PTFE), ummantelt ist.

Aus US 20120198793 A1 ist ein Verfahren zum Dosieren und Verpacken von Polysiliciumbruchstücken bekannt, wobei ein Produktstrom an Polysiliciumbruchstücken über eine Förderrinne transportiert, mittels wenigstens einen Siebs in grobe und feine Bruchstücke getrennt, mittels einer Dosierwaage abgewogen und auf ein Zielgewicht dosiert wird, über eine Abführrinne abgeführt und zu einer Verpackungseinheit transportiert wird, wo die Polysiliciumbruchstücke in einen ersten Kunststoffbeutel gefüllt werden und dieser verschlossen wird, wobei dieser Kunststoffbeutel enthaltend Polysiliciumbruchstücke in einen weiteren, mittels eines Formgebers geformten Kunststoffbeutel verpackt wird, der anschließend verschweißt wird, wobei das wenigstens eine Sieb und die Dosierwaage an ihren Oberflächen wenigstens teilweise ein Hartmetall umfassen und der Formgeber zum Formen des Kunststoffbeutels eine verschleißfeste Beschichtung aufweist.

Im Stand der Technik ist oftmals eine händische Gewichtskorrektur oder sogar ein händisches Verpacken von Polysilicium vorgesehen, um die erforderlichen Einwaagetoleranzen einhalten zu können.

Außerdem besteht das Problem, dass durch Transport und Wiegung der Polysiliciumbruchstücke in Förderrinnen, Sieben, Dosiersystemen und Abführrinnen Feinanteil entsteht. Dieser Feinanteil muss erneut abgesiebt und klassifiziert werden. Bei einem System mit Sieben, die den Produktstrom in Grob- und Feinanteile trennen, ist bedingt durch die notwendigen Fallhöhen die Feinanteilentstehung besonders ausgeprägt.

Im Stand der Technik sind auch sog. Mehrkopfwaagen bekannt. Mehrkopfwaagen (auch Kombinationswaagen bzw. Teilmengenwaagen, eng. multihead weigher bzw. combination weigher) werden vor allem in der Lebensmittelindustrie zum Befüllen bereitgestellter Behältnisse (z. B. Beutel, Schachteln, Becher, Dosen oder Gläser) eingesetzt.

Bei einer kreisförmigen Mehrkopfwaage erfolgt die Produktzufuhr mittig oberhalb des Wägesystems (z. B. auf einen Verteilteller). Das Produkt wird von dort radial nach außen zu den kreisförmig angeordneten Vorratsbehältern (sog. Vorschalen) und anschließend in die darunterliegenden Wägebehälter (sog. Wägeschalen) befördert. Ein Computer ermittelt aus mehreren Teilmengen die Kombination, die dem Soll-Gewicht am nächsten kommt und veranlasst die zeitgleiche Abschüttung. Die entleerten Vorrats- und Wägebehälter werden daraufhin sofort wieder befüllt.

Eine solche Mehrkopfwaage ist beispielsweise in US 6127635 A beschrieben, nämlich eine Kombinationswaage mit einer Mehrzahl von Wägezellen und diesen jeweils zugeordneten Wägebehältern mit jeweils einem verschließbaren Ausgang und einer ausgangsseitigen Übergabeeinrichtung zum Abgeben gewogener Produkte in darunter anzuordnende Packungen, und einer Steuerung, die eingangsseitig mit den jeweiligen Ausgängen der Wägezellen und ausgangsseitig mit jeweiligen Antrieben für die Verschließbaren Ausgänge verbunden ist, und die diese Antriebe der Ausgänge so steuert, dass jeweils eine Unterkombination mehrerer Wägebehälter zum Bilden einer in eine Verpackung abzugebenden Gesamtmenge ausgewählt wird, dadurch gekennzeichnet, dass die Steuerung in eine zweite Betriebsart umschaltbar ist, in der sie die Antriebe der Ausgänge so ansteuert, dass jeder Wägebehälter unabhängig von den anderen ausgewählt wird.

Zur Dosierung von Polysiliciumbruchstücken und deren anschließende Verpackung in Kunststoffbeutel wäre eine solche Mehrkopfwaage nicht geeignet, da auch hier die notwendigen Fallhöhen zu einer Entstehung von Feinanteil führen würden. Zudem würde das Polysilicium durch ein solches Dosieren und Abwiegen und das zwingend erforderliche Absieben von Feinanteil kontaminiert.

Aus dieser Problematik ergab sich die Aufgabenstellung der Erfindung.

Die Aufgabe wird gelöst durch ein Verfahren zum Verpacken von Polysiliciumbruchstücken, umfassend Bereitstellen einer Menge von Polysiliciumbruchstücken, Entnahme einer Vielzahl von Teilmengen aus der Menge von Polysiliciumbruchstücken mittels Schaufeln, Greifern, Behältern oder händisch und Wägung der Teilmengen, optional Klassifizierung der Teilmengen von Polysiliciumbruchstücken nach Größenklassen, wobei die entnommenen und verwogenen Teilmengen in einen Pufferspeicher umfassend eine Vielzahl von Pufferbehältern geführt werden, so dass die Pufferbehälter jeweils eine Teilmenge von Polysiliciumbruchstücken enthalten, Vorgabe eines Zielgewichts der in einem Kunststoffbeutel zu verpackenden Siliciumbruchstücke, Kombination von den mindestens 4 Teilmengen aus der Vielzahl von Teilmengen von Polysiliciumbruchstücken, deren Gesamtgewicht dem Zielgewicht am nächsten kommt, Einfüllen der Polysiliciumbruchstücke der mindestens 4 Teilmengen in einen Kunststoffbeutel und Verschweißen des Kunststoffbeutels, wobei bezogen auf das Gesamtgewicht der mindestens 4 Teilmengen weniger als 0,5 % an Feinmaterial entsteht, wobei es sich beim Feinmaterial um Partikel handelt, die sich mittels eines Maschensiebs mit einer Maschenweite von 8 mm (quadratische Maschen) von der aus wenigstens 4 Teilmengen kombinierten Gesamtmenge an Bruchstücken der Größe 20 bis 200 mm absieben lassen.

Die Menge von Polysiliciumbruchstücken wird vorzugweise mittels auf einer Förderrinne bewegter Polysiliciumbruchstücke bereitgestellt. Die Größenverteilung der Polysiliciumbruchstücke im Ausgangsproduktstrom hängt u.a. vom vorangegangen Zerkleinerungsprozessen ab. Die Art der Aufteilung in grobe und feine Bruchstücke sowie die Größe der groben bzw. feinen Bruchstücke hängen vom gewünschten Endprodukt ab, das zu dosieren und zu verpacken ist.

Bei den Teilmengen der Polysiliciumbruchstücke kann es sich um eine Vielzahl von Polysiliciumbruchstücken, aber auch um einzelne Bruchstücke handeln. Bei den einzelnen Bruchstücken handelt es sich vorzugsweise um Bruchstücke mit einem Mindestgewicht von 500 g.

Das gesamte Verfahren der Entnahme von Teilmengen, Verwiegung der Teilmengen, Kombination der Teilmengen zur Dosierung auf ein Zielgewicht kann sowohl manuell als auch automatisiert ablaufen.

Es hat sich gezeigt, dass dieses Verfahren besonders produktschonend ist. Durch die Kombination von mindestens 4 verwogenen Teilmengen ist ein besonders genaues Dosierungsergebnis zu erzielen.

Es ist also vorgesehen, Teilmengen oder Einzelbruchstücke zu wiegen und optional zu klassifizieren. Bei einer Klassifizierung erfolgt insbesondere die Zuordnung der Teilmenge zu einer bestimmten Größenklasse.

Die Größenklasse ist als längste Entfernung zweier Punkte auf der Oberfläche eines Siliciumbruchstücks (=max. Länge) definiert:

| | |
|---|---|
| Bruchgröße 0 [mm] | 1 bis 5 |
| Bruchgröße 1 [mm] | 4 bis 15 |
| Bruchgröße 2 [mm] | 10 bis 40 |

Neben den zuvor erwähnten Größenklassen ist die Klassifizierung und Sortierung von polykristallinem Silicium in folgende Bruchgrößen ebenfalls üblich:

| | |
|---|---|
| Bruchgröße 3 [mm] | 20 bis 60 |
| Bruchgröße 4 [mm] | 45 bis 120 |
| Bruchgröße 5 [mm] | 90 bis 200 |

Dabei liegen jeweils mindestens 90 Gew.-% der Bruchfraktion innerhalb der genannten Größenbereiche.

Bei händischer Entnahme ist die Verwendung geeigneter kontaminationsarmer Handschuhe bevorzugt, z.B. eines Überziehhandschuhs in Kombination mit einem Unterziehhandschuh, wobei die Handinnenfläche des Überziehhandschuhs aus LDPE besteht und die Handrückenfläche des Überziehhandschuhs aus Tyveek^{®} (DuPont) besteht, wobei beide Flächen miteinander verschweißt sind und wobei der Unterziehhandschuh aus Dyneema^{®} (Royal DSM N.V.), das mit Polyurethan beschichtet ist, besteht.
Bei Tyvek^{®} der Firma DuPont handelt es sich um ein papiervliesartiges Faserfunktionstextil aus thermisch verschweißten Fasern aus Polyethylen mit hoher Dichte (HDPE).
Dyneema^{®} der Firma Royal DSM N.V. ist eine hochfeste Polyethylen-Faser (PE) mit einer Zugfestigkeit von 3 bis 4 GPa (3000 bis 4000 N/mm²).
Ebenso kann ein mehrlagiger Handschuh verwendet werden, wobei die äußere Lage des Handschuhs aus einer Handinnenfläche aus LDPE besteht und einer Handrückenfläche aus Tyveek^{®} besteht, wobei beide Flächen miteinander verschweißt sind und mindestens eine der innen liegenden Lagen des Handschuhs aus Dyneema^{®} besteht, das mit Polyurethan beschichtet ist.

Die Wägung der Teilmengen kann volumetrisch erfolgen. Insbesondere bei kleinen Bruchgrößen ist die Schüttdichte des Polysiliciums bekannt, so dass mit dem Volumen auch das Gewicht der Teilmengen bekannt ist oder bestimmt werden kann. Das Volumen der Teilmenge ist bekannt, wenn Behälter, Schaufeln oder dergleichen mit definiertem Füllvolumen verwendet werden. Dies gilt auch für die händische Entnahme von Teilmengen. Gegebenenfalls kann auch eine Abschätzung erfolgen.

Das Verfahren ist aber auch automatisierbar. Die Wägung der Teilmengen kann gravimetrisch, beispielsweise über Durchlaufwaagensysteme, oder optisch mittels Kamerasystemen mit vorgeschalteten Dosierrinnen zur Portionierung erfolgen. Die Materi alaufteilung erfolgt vorzugsweise über eine Regelung, die über volumetrische oder gravimetrische Eingangsparameter gesteuert wird. Mit dieser Regelung ist es möglich, einen Produktförderstrom konstant zuzuleiten und auf eine Vielzahl von Teilmengen aufzuteilen.

Falls es sich um einen kontinuierlichen Förderstrom handelt, was bevorzugt ist, wird der Förderstrom über das Ergebnis der Wiege- bzw. Klassifiziereinheit getaktet.

Danach werden die Teilmengen erfindungsgemäß in einen Pufferspeicher geführt, um später zu der gewünschten Verpackungsmenge kombiniert zu werden. Ein solcher Pufferspeicher umfasst eine Vielzahl von Pufferbehältern, die jeweils eine Teilmenge von Polysiliciumbruchstücken enthalten.

Diese aus den mindestens 4 Teilmengen kombinierte Menge an Polysiliciumbruchstücken wird anschließend in wenigstens einen Kunststoffbeutel verpackt.

Vorzugsweise wird in zwei Kunststoffbeutel, einen Innen- und einen Außenbeutel verpackt, wobei die Polysiliciumbruchstücke der mindestens 4 Teilmengen zunächst in einen ersten Kunststoffbeutel gefüllt werden, dieser daraufhin verschlossen wird, und nachfolgend der erste Kunststoffbeutel enthaltend Polysiliciumbruchstücke in einen zweiten Kunststoffbeutel eingebracht und dieser ebenfalls verschlossen wird.

Ebenso ist es bevorzugt, die Polysiliciumbruchstücke der mindestens 4 Teilmengen in einen ersten Kunststoffbeutel zu füllen, welcher in einen zweiten Kunststoffbeutel gesteckt ist, und nachfolgend beide Kunststoffbeutel zu verschließen. In dieser Ausführung sind die beiden Beutel bereits ineinandergesteckt, bevor das Polysilicium eingefüllt wird.

Gegebenenfalls werden die Polysiliciumbruchstücke vor dem Verpacken nasschemisch gereinigt.

Zum Abfüllen eignet sich die in US 20100154357 A1 beschriebene Vorrichtung, die einen frei hängenden Energieabsorber umfasst, der vor Einfüllen des polykristallinen Siliciums in den Kunststoff-Innenbeutel eingeführt wird. Über den Energieabsorber wird das polykristalline Silicium in den Kunststoffbeutel eingefüllt. Der frei hängende Energieabsorber wird anschließend aus dem mit polykristallinem Silicium gefüllten Kunststoffbeutel entfernt und der Kunststoffbeutel wird verschlossen.

Das Verschließen des Kunststoffbeutels kann beispielsweise mittels Verschweißen, Verkleben oder Formschluss erfolgen. Vorzugsweise erfolgt es mittels Verschweißen.

Der Beutel besteht idealer weise aus eine Kunststofffolie, mit einer Stärke von 100-500 µm.

Als Kunststoff wird vorzugsweise eine Monofolie aus PE-LD, PE-LLD oder PE-HD verwendet. Die Verwendung von Mehrschichtfolien aus Blasextrusion oder Gießverfahren ist ebenfalls möglich.

Bei herkömmlicher Dosierung müssen vor der Verpackung 1% - 3% der Gesamtmenge als Feinmaterial wieder ausgesiebt werden.

Beim erfindungsgemäßen Verfahren entstehen weniger als 0,5% der Gesamtmenge als Feinmaterial. Es entsteht also deutlich weniger Feinmaterial, das gegebenenfalls erneut klassifiziert werden muss.

Das Feinmaterial an polykristallinem Silicium umfasst im Rahmen der Erfindung für Bruchgrößen 3 bis 5 Partikel, die sich mittels eines Maschensiebs mit einer Maschenweite von 8 mm (quadratische Maschen) von der aus wenigstens 4 Teilmengen kombinierten Gesamtmenge an Bruchstücken absieben lassen. Die Quantifizierung des Feinanteils erfolgt gravimetrisch.

Bei Bruchgröße 2 umfasst das Feinmaterial Partikel von polykristallinem Silicium mit einer Größe von weniger als 8,3 mm, vorzugsweise mit einer Größe von weniger als 9,5 mm.

Bei Bruchgröße 1 umfasst das Feinmaterial Partikel von polykristallinem Silicium mit einer Größe von weniger als 3,5 mm, vorzugsweise mit einer Größe von weniger als 3,9 mm.

Bei Bruchgröße 0 umfasst das Feinmaterial Partikel von polykristallinem Silicium mit einer Größe von weniger als 1 mm.

Die Bestimmung des Feinanteils von Bruchgrößen 0 bis 2 erfolgt durch ein handelsübliches Partikelgrößenmessgerät, z.B. einen Camsizer^{®} der Fa. Retsch. Als Messwert für den Feinanteil wurde das 1% Gew. Quantil (= 10000 ppmw) herangezogen.

Bei einer Dosierung größerer Bruchgrößen mit einem Stückgewicht ab 500 g ist ein Zielgewicht von 10kg (+-100g) nur durch die Kombination von Teilmengen zu erreichen.

Bei einem manuellen Handverpackungsprozess werden die Pufferbehälter des Pufferspeichers optisch gekennzeichnet, um die Kombination der Teilmengen zum Zielgewicht zu ermöglichen.

Durch die Kombination von Teilmengen lässt sich auch ein wirtschaftlicherer Prozess darstellen, zumal Nacharbeit (z.B. wegen Unter-/Übergewicht außerhalb der Toleranz) entfällt. Die Prozessstreuung ist deutlich geringer als mit herkömmlichen Netto- oder Bruttowaagen.

## Patentansprüche

1. Verfahren zum Verpacken von Polysiliciumbruchstücken, umfassend Bereitstellen einer Menge von Polysiliciumbruchstücken, Entnahme einer Vielzahl von Teilmengen aus der Menge von Polysiliciumbruchstücken mittels Greifern, Schaufeln, Behältern oder händisch und Wägung der Teilmengen, optional Klassifizierung der Teilmengen von Polysiliciumbruchstücken nach Größenklassen, wobei die entnommenen und verwogenen Teilmengen in einen Pufferspeicher umfassend eine Vielzahl von Pufferbehältern geführt werden, so dass die Pufferbehälter jeweils eine Teilmenge von Polysiliciumbruchstücken enthalten, Vorgabe eines Zielgewichts der in einem Kunststoffbeutel zu verpackenden Siliciumbruchstücke, Kombination von mindestens 4 Teilmengen aus der Vielzahl von Teilmengen von Polysiliciumbruchstücken, deren Gesamtgewicht dem Zielgewicht am nächsten kommt, Einfüllen der Polysiliciumbruchstücke der mindestens 4 Teilmengen in einen Kunststoffbeutel und Verschließen des Kunststoffbeutels, wobei bezogen auf das Gesamtgewicht der mindestens 4 Teilmengen weniger als 0,5 % an Feinmaterial entsteht, wobei es sich beim Feinmaterial um Partikel handelt, die sich mittels eines Maschensiebs mit einer Maschenweite von 8 mm (quadratische Maschen) von der aus wenigstens 4 Teilmengen kombinierten Gesamtmenge an Bruchstücken der Größe 20 bis 200 mm absieben lassen.

2. Verfahren nach Anspruch 1, wobei es sich bei den Teilmengen der Polysiliciumbruchstücke um jeweils eine Vielzahl von Polysiliciumbruchstücken oder um einzelne Polysiliciumbruchstücke handelt.

3. Verfahren nach einem der Ansprüche 1 bis 2, wobei Wägung der Teilmengen gravimetrisch oder optisch mittels Kamerasystemen mit vorgeschalteten Dosierrinnen zur Portionierung erfolgt.

4. Verfahren nach einem der Ansprüche 1 bis 2, wobei Wägung der Teilmengen bei bekannter Schüttdichte der Polysiliciumbruchstücke volumetrisch erfolgt.

5. Verfahren nach einem der Ansprüche 1 bis 4, wobei die Teilmengen aus einem kontinuierlichen Förderstrom von Polysiliciumbruchstücken entnommen werden und jener Förderstrom über das Ergebnis der Wiege- bzw. Klassifiziereinheit getaktet wird.

6. Verfahren nach einem der Ansprüche 1 bis 5, wobei die Polysiliciumbruchstücke der mindestens 4 Teilmengen zunächst in einen ersten Kunststoffbeutel gefüllt werden, dieser daraufhin verschlossen wird, und nachfolgend der erste Kunststoffbeutel enthaltend Polysiliciumbruchstücke in einen zweiten Kunststoffbeutel eingebracht und dieser ebenfalls verschlossen wird.

7. Verfahren nach einem der Ansprüche 1 bis 5, wobei die Polysiliciumbruchstücke der mindestens 4 Teilmengen in einen ersten Kunststoffbeutel gefüllt werden, welcher in einen zweiten Kunststoffbeutel gesteckt ist, und nachfolgend beide Kunststoffbeutel verschlossen werden.

8. Verfahren nach einem der Ansprüche 1 bis 7, wobei das Verschließen des Kunststoffbeutels mittels Verschweißen, Verkleben oder Formschluss erfolgt.

## Claims

1. Method for packing polysilicon chunks, comprising providing an amount of polysilicon chunks, taking a multitude of portions from the amount of polysilicon chunks by means of grabs, shovels, vessels, or manually, and weighing the portions, optionally classifying the portions of polysilicon chunks by size classes, wherein the portions taken and weighed are conducted into a buffer store comprising a multitude of buffer vessels, in such a way that the buffer vessels each contain a portion of polysilicon chunks, defining a target weight for the silicon chunks to be packed in a plastic bag, combining at least 4 portions from the multitude of portions of polysilicon chunks which have a total weight closest to the target weight, introducing the polysilicon chunks of the at least 4 portions into a plastic bag and closing the plastic bag, wherein, based on the total weight of the at least 4 portions, less than 0.5% of fine material forms, the fine material comprising particles which can be sieved off by means of a mesh screen having a mesh size of 8 mm (square meshes) from the total amount of chunks of size 20 to 200 mm combined from at least 4 portions.

2. Method according to Claim 1, wherein the portions of the polysilicon chunks are in each case a multitude of polysilicon chunks or individual polysilicon chunks.

3. Method according to either of Claims 1 and 2, wherein the portions are weighed gravimetrically or optically by means of camera systems with upstream metering channels for portioning.

4. Method according to either of Claims 1 and 2, wherein the portions are weighed volumetrically when the bulk density of the polysilicon chunks is known.

5. Method according to any of Claims 1 to 4, wherein the portions are taken from a continuous conveying stream of polysilicon chunks and that conveying stream is controlled by the result from the weighting or classifying unit.

6. Method according to any of Claims 1 to 5, wherein the polysilicon chunks of the at least 4 portions are first filled into a first plastic bag, which is then closed, and the first plastic bag containing polysilicon chunks is subsequently introduced into a second plastic bag and the latter is likewise closed.

7. Method according to any of Claims 1 to 5, wherein the polysilicon chunks of the at least 4 portions are filled into a first plastic bag, which is inserted into a second plastic bag, and the two plastic bags are subsequently closed.

8. Method according to any of Claims 1 to 7, wherein the plastic bag is closed by means of welding, bonding or form-fitting.

## Revendications

1. Procédé pour l'emballage de morceaux de polysilicium, comprenant la mise à disposition d'une quantité de morceaux de polysilicium, le prélèvement d'une multitude de quantités partielles de la quantité de morceaux de polysilicium au moyen de grappins, d'aubes, de récipients ou à la main et la pesée des quantités partielles, la classification éventuelle des quantités partielles de morceaux de polysilicium en fonction de classes de grosseur, les quantités partielles prélevées et pesées étant guidées dans un accumulateur tampon comprenant une multitude de récipients tampon de manière telle que les récipients tampon contiennent à chaque fois une quantité partielle de morceaux de polysilicium, la définition d'un poids cible des morceaux de silicium à emballer dans un sachet en matériau synthétique, la combinaison d'au moins 4 quantités partielles parmi la multitude de quantités partielles de morceaux de polysilicium, dont le poids total est le plus proche du poids cible, l'introduction des morceaux de polysilicium desdites au moins 4 quantités partielles dans un sachet en matériau synthétique et la fermeture du sachet en matériau synthétique, où, par rapport au poids total desdites au moins 4 quantités partielles, il se forme moins de 0,5% sous forme de matériau fin, le matériau fin étant des particules qui peuvent être éliminées au moyen d'un tamis à mailles présentant une largeur de maille de 8 mm (mailles carrées) de la quantité totale combinée à partir d'au moins 4 quantités partielles de morceaux de la grosseur de 20 à 200 mm.

2. Procédé selon la revendication 1, où il s'agit, pour les quantités partielles de morceaux de polysilicium, à chaque fois d'une multitude de morceaux de polysilicium ou de morceaux individuels de polysilicium.

3. Procédé selon l'une quelconque des revendications 1 à 2, la pesée des quantités partielles étant réalisée par gravimétrie ou de manière optique au moyen de systèmes de caméras présentant des chenaux de dosage disposés en amont pour la répartition en portions.

4. Procédé selon l'une quelconque des revendications 1 à 2, la pesée des quantités partielles, à une densité apparente connue des morceaux de polysilicium, étant réalisée de manière volumétrique.

5. Procédé selon l'une quelconque des revendications 1 à 4, les quantités partielles étant prélevées d'un flux alimenté continu de morceaux de polysilicium et chaque flux alimenté étant cadencé via le résultat de l'unité de pesée et de classification.

6. Procédé selon l'une quelconque des revendications 1 à 5, les morceaux de polysilicium desdites au moins 4 quantités partielles étant d'abord introduits dans un premier sachet en matériau synthétique, celui-ci étant ensuite fermé et le premier sachet en matériau synthétique, contenant les morceaux de polysilicium, étant ensuite introduit dans un deuxième sachet en matériau synthétique et celui-ci étant également fermé.

7. Procédé selon l'une quelconque des revendications 1 à 5, les morceaux de polysilicium desdites au moins 4 quantités partielles étant d'abord introduits dans un premier sachet en matériau synthétique, qui a été glissé dans un deuxième sachet en matériau synthétique et les deux sachets en matériau synthétique étant ensuite fermés.

8. Procédé selon l'une quelconque des revendications 1 à 7, la fermeture du sachet en matériau synthétique étant réalisée par soudure, collage ou complémentarité de forme.
